# EUROPEAN PATENT APPLICATION

(11) **EP 4 492 525 A1**
(43) Date of publication of application: **15.01.2025**
(21) Application number: 23788587.6
(22) Date of filing: 12.04.2023
(51) Int. Cl.: H01M 10/0566, H01M 10/0567, H01M 10/42, H01M 10/052

(54) **LITHIUM SECONDARY BATTERY**

(30) Priority: 12.04.2022 KR 20220045380; 11.04.2023 KR 20230047808
(71) Applicant: LG Energy Solution, Ltd., Seoul 07335 (KR); Research & Business Foundation Sungkyunkwan University, Gyeonggi-do 16419 (KR)
(72) Inventor: AHN, Kyoung Ho, Daejeon 34122 (KR); LEE, Won Tae, Daejeon 34122 (KR); YI, Gi Ra, Suwon-si Gyeonggi-do 16419 (KR); PARK, Ho Seok, Suwon-si Gyeonggi-do 16419 (KR); LEE, Chul Haeng, Daejeon 34122 (KR); HAN, Jun Hyeok, Daejeon 34122 (KR); JEONG, You Kyeong, Daejeon 34122 (KR); LEE, Myung Goo, Suwon-si Gyeonggi-do 16419 (KR); PARK, Jeong Hee, Suwon-si Gyeonggi-do 16419 (KR); KIM, Jun Su, Suwon-si Gyeonggi-do 16419 (KR); PATIL, Virendra Sudam, Suwon-si Gyeonggi-do 16419 (KR); KULKARNI, Uddhav Ravindra, Suwon-si Gyeonggi-do 16419 (KR); RANA, Harpalsinh Hardevsinh, Suwon-si Gyeonggi-do 16419 (KR)
(74) Representative: Hoffmann Eitle
(86) International application number: PCT/KR2023/004917
(87) International publication number: WO 2023/200238

(57) **Abstract**

The present invention provides a lithium secondary battery exhibiting excellent high-temperature storage characteristics and low-temperature storage characteristics. Specifically, the lithium secondary battery of the present invention includes a positive electrode including a lithium transition metal oxide of Formula 1 as a positive electrode active material; a negative electrode including a negative electrode active material; a separator disposed between the positive electrode and the negative electrode; and a non-aqueous electrolyte solution containing a lithium salt, a non-aqueous organic solvent, and an additive, wherein the additive may include an ionic liquid represented by Formula 2.

## Description

### TECHNICAL FIELD

### Cross-reference to Related Applications

This application claims priority from Korean Patent Application Nos. 10-2022-0045380, filed on April 12, 2022, and 10-2023-0047808, filed on April 11, 2023, the disclosures of which are incorporated by reference herein.

### Technical Field

The present invention relates to a lithium secondary battery exhibiting excellent high-temperature storage characteristics and low-temperature storage characteristics.

### BACKGROUND ART

Dependence on electrical energy is gradually increasing in modern society, and, accordingly, production of the electrical energy is further increasing. In order to solve environmental problems that occurred during this process, renewable energy generation is in the spotlight as a next-generation power generation system.

With respect to renewable energy, a large-capacity power storage device is indispensable to supply power stably. A lithium-ion battery is in the spotlight as a device exhibiting the highest energy density which is currently commercialized among such power storage devices.

The lithium-ion battery is largely composed of a positive electrode formed of a transition metal oxide containing lithium, a negative electrode capable of storing the lithium, a non-aqueous electrolyte solution that becomes a medium for transferring lithium ions, and a separator.

Particularly, a significant amount of research on the non-aqueous electrolyte solution has been conducted while the non-aqueous electrolyte solution is known as a component that greatly affects stability or safety of the battery.

In general, a liquid electrolyte solution, in which an electrolyte salt is dissolved in an organic solvent, has been mainly used as the non-aqueous electrolyte solution. However, the liquid electrolyte solution has disadvantages in that the organic solvent has high volatility in a high-temperature atmosphere, a large amount of gas is generated by a side reaction with the electrode, and stability is low due to combustion caused by an increase in temperature of the battery itself. Furthermore, an increase in resistance of an interface between the electrode and the non-aqueous electrolyte solution in a low-temperature atmosphere results in degradation of overall performance.

Thus, there is a need to develop a lithium secondary battery having a new configuration in which overall performance may be improved by preventing degradation of the secondary battery in high and low-temperature atmospheres.

### DISCLOSURE OF THE INVENTION

### TECHNICAL PROBLEM

An aspect of the present invention provides a lithium secondary battery having improved high-temperature storage characteristics and low-temperature storage characteristics.

### TECHNICAL SOLUTION

In an embodiment of the present invention, there is provided a lithium secondary battery including:
a positive electrode including a lithium transition metal oxide of Formula 1 as a positive electrode active material;
a negative electrode including a negative electrode active material;
a separator disposed between the positive electrode and the negative electrode; and
a non-aqueous electrolyte solution containing a lithium salt, a non-aqueous organic solvent, and an additive,
wherein the additive includes an ionic liquid represented by Formula 2.

[Formula 1] Li₁₊ₐNiₓCo_{y}M¹_{z}M²_{w}O₂

wherein, in Formula 1,
M¹ is manganese (Mn), aluminum (Al), or a combination thereof,
M² is at least one selected from the group consisting of Al, zirconium (Zr), tungsten (W), titanium (Ti), magnesium (Mg), calcium (Ca), and strontium (Sr), and 0≤a≤0.5, 0.5<x<1.0, 0<y≤0.4, 0<z≤0.4, and 0≤w≤0.1. 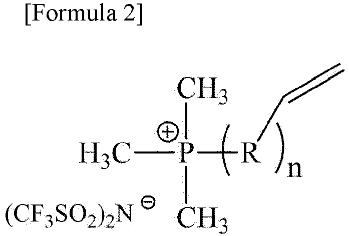
wherein, in Formula 2,
R is an alkylene group having 1 to 5 carbon atoms, and
n is an integer of 0 to 3.

### ADVANTAGEOUS EFFECTS

Since a lithium secondary battery according to the present invention uses a positive electrode including a lithium transition metal oxide having a nickel content of greater than 50 mol% as a positive electrode active material in combination with a non-aqueous electrolyte solution containing a phosphonium salt-based ionic liquid as an additive, a stable film with low resistance and high flame retardancy may be formed on a surface of the electrode to prevent degradation of the battery, and thus, excellent high-temperature storage characteristics and low-temperature storage characteristics may be achieved.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.
FIG. 1 is a graph illustrating the results of evaluation of gas generation amounts after high-temperature storage of lithium secondary batteries according to Experimental Example 2 of the present invention.
FIG. 2 is a graph illustrating the results of evaluation of low-temperature cycle characteristics of lithium secondary batteries according to Experimental Example 3 of the present invention.
FIG. 3 is a graph illustrating the results of evaluation of low-temperature storage characteristics of lithium secondary batteries according to Experimental Example 4 of the present invention.

### MODE FOR CARRYING OUT THE INVENTION

Hereinafter, the present invention will be described in more detail.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

For example, in the present specification, the expression "%" denotes wt% unless explicitly stated otherwise.

Also, unless otherwise defined in the specification, the expression "substitution" denotes that at least one hydrogen bonded to carbon is substituted with an element other than hydrogen, for example, an alkyl group having 1 to 5 carbon atoms or a fluorine element.

As a result of repeated research to improve resistance and output characteristics of a lithium secondary battery, the present inventors have found that an increase in resistance at low temperature may be suppressed and flame retardancy and ignition possibility of the lithium secondary battery in a high-temperature storage atmosphere may be improved to improve high-temperature storage characteristics by using a positive electrode including a positive electrode active material of a specific composition in combination with a non-aqueous electrolyte solution containing an additive of a specific structure, thereby leading to the completion of the present invention.

Hereinafter, the present invention will be described in detail.

### Lithium Secondary Battery

According to an embodiment of the present invention, a lithium secondary battery of the present invention includes:
a positive electrode including a lithium transition metal oxide of Formula 1 below as a positive electrode active material;
a negative electrode including a negative electrode active material;
a separator disposed between the positive electrode and the negative electrode; and
a non-aqueous electrolyte solution containing a lithium salt, a non-aqueous organic solvent, and an additive,
wherein the additive may include an ionic liquid represented by Formula 2 below.

[Formula 1] Li₁₊ₐNiₓCo_{y}M¹_{z}M²_{w}O₂

In Formula 1,
M¹ is manganese (Mn), aluminum (Al), or a combination thereof,
M² is at least one selected from the group consisting of Al, zirconium (Zr), tungsten (W), titanium (Ti), magnesium (Mg), calcium (Ca), and strontium (Sr), and 0≤a≤0.5, 0.5<x<1.0, 0<y≤0.4, 0<z≤0.4, and 0≤w≤0.1. 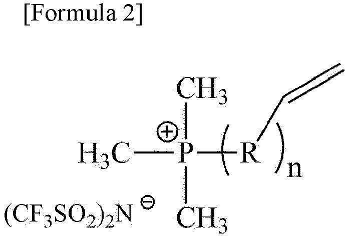
wherein, in Formula 2,
R is an alkylene group having 1 to 5 carbon atoms, and
n is an integer of 0 to 3.

Hereinafter, each component of the lithium secondary battery according to the present invention will be described in more detail.

### (1) Positive Electrode

The positive electrode according to the present invention may include a positive electrode active material layer including a positive electrode active material, and, if necessary, the positive electrode active material layer may further include a conductive agent and/or a binder.

Also, the positive electrode active material may include a lithium transition metal oxide represented by the following Formula 1.

[Formula 1] Li₁₊ₐNiₓCo_{y}M¹_{z}M²_{w}O₂

In Formula 1,
M¹ is Mn, Al, or a combination thereof,
M² is at least one selected from the group consisting of Al, Zr, W, Ti, Mg, Ca, and Sr, and 0≤a≤0.5, 0.5<x<1.0, 0<y≤0.4, 0<z≤0.4, and 0≤w≤0.1.

1+a represents an atomic fraction of lithium in the lithium transition metal oxide, wherein a may satisfy 0≤a≤0.5, preferably 0≤a≤0.2, and more preferably 0≤a≤0.1.

x represents an atomic fraction of nickel among total transition metal elements in the lithium transition metal oxide, wherein x may satisfy 0.6<x<1.0, specifically, 0.75≤x≤0.98, and a nickel content of 0.5 or more is more advantageous for achieving high capacity.

y represents an atomic fraction of cobalt among the total transition metal elements in the lithium transition metal oxide, wherein y may satisfy 0<y≤0.4, particularly 0<y≤0.3, and more particularly 0.05≤y≤0.3.

z represents an atomic fraction of M¹ element among the total transition metal elements in the lithium transition metal oxide, wherein z may satisfy 0<z≤0.4, preferably 0<z≤0.3, and more preferably 0.01≤z≤0.3.

w represents an atomic fraction of M² element among the total transition metal elements in the lithium transition metal oxide, wherein w may satisfy 0<w≤0.1, preferably 0<w≤0.05, and more preferably 0<w≤0.02.

Specifically, the positive electrode active material may include a lithium composite transition metal oxide, such as Li(Ni_{0.6}Mn_{0.2}Co_{0.2})O₂, Li(Ni_{0.7}Mn_{0.15}Co_{0.15})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, or Li(Ni_{0.90}Mn_{0.05}Co_{0.05})O₂, in which a Ni content is 0.55 atm% or more, in order to achieve a high-capacity battery. Preferably, the positive electrode active material may include a lithium composite transition metal oxide, such as Li(Ni_{0.7}Mn_{0.15}Co_{0.15})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, or Li(Ni_{0.90}Mn_{0.05}Co_{0.05})O₂, in order to achieve a high-capacity battery.

In the positive electrode active material, it is easier to achieve a high-capacity battery as the content of nickel among the total transition metal elements in the lithium transition metal oxide is increased, but, in a case in which the nickel content is 70 atm% or more, various nucleophilic reactions may be induced on a surface of the positive electrode due to structural instability, and, as a result, generation of gas, such as CO₂, may be increased while a carbonate solvent is easily decomposed during high-temperature storage. The gas thus generated may cause a side reaction that continuously forms Li₂CO₃ or LiF while combining with lithium (Li) ions on the surface of the positive electrode and a surface of the negative electrode. This side reaction causes an increase in resistance of the lithium secondary battery. Thus, in the present invention, as will be described later, the increase in resistance of the lithium secondary battery including the positive electrode active material having a nickel content of 70 atm% or more may be effectively suppressed by using a non-aqueous electrolyte solution containing an additive capable of suppressing the side reaction of the carbonate solvent in combination.

The positive electrode active material of the present invention may additionally use lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (0<Y<1), LiMn_{2-Z}Ni_{z}O₄ (0<Z<2)), lithium-nickel-cobalt-based oxide (e.g., LiNi_{1-Y1}Co_{Y1}O₂ (0<Y1<1)), lithium-manganese-cobalt-based oxide (e.g., LiCo_{1-Y2}Mn_{Y2}O₂ (0<Y2<1), LiMn_{2-Z1}Co_{z1}O₄ (0<Z1<2)), or Li(Niₚ₁Co_{q1}Mnᵣ₂)O₄ (0<p1<2, 0<q1<2, 0<r2<2, and p1+q1+r2=2) in combination with the lithium composite metal oxide represented by Formula 1.

The positive electrode active material may be included in an amount of 80 wt% to 99 wt%, specifically, 90 wt% to 99 wt% based on a total weight of a solid content in the positive electrode slurry. In this case, when the amount of the positive electrode active material is 80 wt% or less, since energy density is reduced, capacity may be reduced.

Next, the conductive agent is used to provide conductivity to the electrode, wherein any conductive agent may be used without particular limitation as long as it has suitable electron conductivity without causing adverse chemical changes in the battery. Specific examples of the conductive agent may be a conductive material, such as: carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, and any one thereof or a mixture of two or more thereof may be used.

The conductive agent may be included in an amount of 0.1 wt% to 10 wt%, preferably, 0.1 wt% to 5.0 wt% based on a total weight of the positive electrode active material layer.

Next, the binder improves the adhesion between positive electrode active material particles and the adhesion between the positive electrode active material and a current collector.

As an example of the binder, any one of a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder or a mixture of two or more thereof may be used.

The binder may be included in an amount of 0.1 wt% to 15 wt%, preferably, 0.1 wt% to 10 wt% based on the total weight of the positive electrode active material layer.

The positive electrode of the present invention may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent, dried, and then rolled to form an active material layer, or a method in which the positive electrode slurry is cast on a separate support and a film separated from the support is then laminated on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode material. The positive electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if a positive electrode material mixture may be adjusted to have appropriate viscosity in consideration of a coating thickness of the positive electrode material mixture, manufacturing yield, and workability, and is not particularly limited.

### (2) Negative Electrode

Next, a negative electrode will be described.

The negative electrode according to the present invention includes a negative electrode active material layer including a negative electrode active material, and the negative electrode active material layer may further include a conductive agent and/or a binder, if necessary.

As the negative electrode active material, various negative electrode active materials used in the art, for example, a carbon-based negative electrode active material, a silicon-based negative electrode active material, or a mixture thereof may be used.

According to an embodiment, the negative electrode active material may include a carbon-based negative electrode active material, and, as the carbon-based negative electrode active material, various carbon-based negative electrode active materials used in the art, for example, graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based negative electrode active material is not particularly limited, and materials of various shapes, such as an irregular shape, planar shape, flaky shape, spherical shape, or fibrous shape, may be used.

Preferably, at least one carbon-based negative electrode active material selected from natural graphite and artificial graphite may be used as the negative electrode active material, and both natural graphite and artificial graphite may be used together to suppress exfoliation of the active material by increasing adhesion to a current collector.

According to another embodiment, as the negative electrode active material, the carbon-based negative electrode active material may be used in combination with the silicon-based negative electrode active material.

The silicon-based negative electrode active material, for example, may include at least one selected from the group consisting of metallic silicon (Si), silicon oxide (SiOₓ, where 0<x<2), silicon carbide (SiC), and a Si-Y alloy (where Y is an element selected from the group consisting of alkali metal, alkaline earth metal, a Group 13 element, a Group 14 element, transition metal, a rare earth element, and a combination thereof, and is not Si). The element Y may be selected from the group consisting of Mg, Ca, Sr, barium (Ba), radium (Ra), scandium (Sc), yttrium (Y), Ti, Zr, hafnium (Hf), rutherfordium (Rf), vanadium (V), niobium (Nb), tantalum (Ta), dubnium (Db), chromium (Cr), molybdenum (Mo), W, seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), Al, gallium (Ga), tin (Sn), indium (In), Ti, germanium (Ge), phosphorus (P), arsenic (As), antimony (Sb), bismuth (Bi), sulfur (S), selenium (Se), tellurium (Te), polonium (Po), and a combination thereof.

Since the silicon-based negative electrode active material exhibits higher capacity characteristics than the carbon-based negative electrode active material, better capacity characteristics may be obtained when the silicon-based negative electrode active material is additionally included. However, with respect to a negative electrode including the silicon-based negative electrode active material, it contains more oxygen (O)-rich components in a solid electrolyte interphase (SEI) film than a graphite negative electrode, and the SEI film containing the O-rich components tends to be decomposed more easily when a Lewis acid, such as HF or PF₅, is present in the electrolyte solution. Thus, with respect to the negative electrode including the silicon-based negative electrode active material, it is necessary to suppress formation of the Lewis acid, such as HF or PF₅, in the electrolyte solution or remove (or scavenge) the formed Lewis acid in order to maintain a stable SEI film. Since the non-aqueous electrolyte solution according to the present invention contains an electrolyte solution additive capable of forming a stable film on the positive electrode and the negative electrode, decomposition of the SEI film may be effectively suppressed when the negative electrode including the silicon-based negative electrode active material is used.

A mixing ratio of the silicon-based negative electrode active material to the carbon-based negative electrode active material may be in a range of 3:97 to 99: 1, preferably, 5:95 to 15:85, as a weight ratio. In a case in which the mixing ratio of the silicon-based negative electrode active material to the carbon-based negative electrode active material satisfies the above range, since a volume expansion of the silicon-based negative electrode active material is suppressed while capacity characteristics are improved, excellent cycle performance may be secured.

The negative electrode active material may be included in an amount of 80 wt% to 99 wt% based on a total weight of the negative electrode active material layer. In a case in which the amount of the negative electrode active material satisfies the above range, excellent capacity characteristics and electrochemical properties may be obtained.

Also, a lithium metal thin film or titanium composite oxide (LTO) may be used as the negative electrode active material, if necessary.

Next, the conductive agent may be included to further improve conductivity of the negative electrode active material layer, wherein any conductive agent may be used without particular limitation so long as it has conductivity without causing adverse chemical changes in the battery. For example, a conductive material, such as: carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used as the conductive agent. The conductive agent may be added in an amount of 10 wt% or less, preferably, 5 wt% or less based on the total weight of the negative electrode active material layer.

The binder is a component that assists in the binding between the conductive agent, the active material, and the current collector, wherein examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The binder may typically be included in an amount of 0.1 wt% to 15 wt%, preferably, 0.1 wt% to 10 wt% based on the total weight of the negative electrode active material layer.

The negative electrode may be prepared according to a method of preparing a negative electrode which is known in the art. For example, the negative electrode may be prepared by a method in which a negative electrode collector is coated with a negative electrode slurry, which is prepared by dissolving or dispersing the negative electrode active material as well as optionally the binder and the conductive agent in a solvent, rolled and dried to form an active material layer, or may be prepared by casting the negative electrode slurry on a separate support and then laminating a film separated from the support on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of the negative electrode active material. The negative electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the negative electrode slurry may be adjusted to have appropriate viscosity in consideration of a coating thickness of the negative electrode material mixture, manufacturing yield, and workability, and is not particularly limited.

### (3) Separator

As the separator included in the lithium secondary battery of the present invention, a conventional porous polymer film commonly used, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer may be used alone or in a lamination therewith, or a typical porous nonwoven fabric, for example, a nonwoven fabric formed of high melting point glass fibers or polyethylene terephthalate fibers may be used, but the present invention is not limited thereto.

### (4) Non-aqueous Electrolyte Solution

The lithium secondary battery according to the present invention may include a non-aqueous electrolyte solution containing a lithium salt, a non-aqueous organic solvent, and an additive, wherein the additive may include an ionic liquid represented by Formula 2 below.

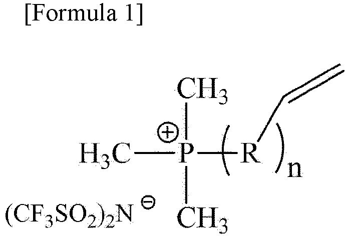

In Formula 1,
R is an alkylene group having 1 to 5 carbon atoms, and
n is an integer of 0 to 3.

### (4-1) Lithium Salt

First, the lithium salt is described as follows.

Any lithium salt typically used in a non-aqueous electrolyte solution for a lithium secondary battery may be used as the lithium salt without limitation, and, for example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻ , PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (lithium bis(fluorosulfonyl)imide, LiN(SO₂F)₂), LiBETI (lithium bis(pentafluoroethanesulfonyl)imide, LiN(SO₂CF₂CF₃)₂), and LiTFSI (lithium bis(trifluoromethanesulfonyl)imide, LiN(SO₂CF₃)₂) or a mixture of two or more thereof, and, in addition to the above-described lithium salt, a lithium salt commonly used in an electrolyte solution of a lithium secondary battery may be used without limitation. Specifically, the lithium salt may include LiPF₆.

The lithium salt may be appropriately changed in a normally usable range, but may be included in a concentration of 0.8 M to 3.0 M, specifically, 1.0 M to 3.0 M in the electrolyte solution to obtain an optimum effect of forming a film for preventing corrosion of the surface of the electrode. In a case in which the concentration of the lithium salt satisfies the above range, viscosity of the non-aqueous electrolyte solution may be controlled to achieve optimal impregnability, and mobility of lithium ions may be improved to obtain an effect of improving capacity characteristics and cycle characteristics of the lithium secondary battery.

### (4-2) Non-aqueous Organic Solvent

Also, a description of the non-aqueous organic solvent is as follows.

Various organic solvents typically used in a non-aqueous electrolyte solution may be used as the non-aqueous organic solvent without limitation, wherein a type thereof is not limited as long as decomposition due to an oxidation reaction during charge and discharge of the secondary battery may be minimized and desired properties may be exhibited together with an additive.

Specifically, the non-aqueous organic solvent may include a cyclic carbonate-based organic solvent, a linear carbonate-based organic solvent, a linear ester-based organic solvent, or a mixed organic solvent thereof.

The cyclic carbonate-based organic solvent is a highly viscous organic solvent which well dissociates the lithium salt in the non-aqueous electrolyte solution due to high permittivity, wherein specific examples of the cyclic carbonate-based organic solvent may be at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include ethylene carbonate.

The linear carbonate-based organic solvent is an organic solvent having low viscosity and low permittivity, wherein specific examples of the linear carbonate-based organic solvent may be at least one organic solvent selected from the group consisting of dimethyl carbonate (DMC), diethyl carbonate (DEC), dipropyl carbonate, ethylmethyl carbonate (EMC), methylpropyl carbonate, and ethylpropyl carbonate, and the linear carbonate-based organic solvent may specifically include ethylmethyl carbonate (EMC).

The linear ester-based organic solvent is a solvent having relatively higher stability during high-temperature and high-voltage operation than the cyclic carbonate-based organic solvent, wherein the linear ester-based organic solvent may improve a disadvantage of the cyclic carbonate-based organic solvent, which causes gas generation during high-voltage operation, and may simultaneously achieve high ionic conductivity.

Specific examples of the linear ester-based organic solvent may be at least one selected from the group consisting of methyl acetate, ethyl acetate, propyl acetate, methyl propionate, ethyl propionate, propyl propionate, and butyl propionate, and the linear ester-based organic solvent may specifically include at least one of ethyl propionate and propyl propionate.

Also, the non-aqueous electrolyte solution of the present invention may further include a cyclic ester-based organic solvent, if necessary.

Furthermore, the cyclic ester-based organic solvent may include at least one selected from the group consisting of γ-butyrolactone, γ-valerolactone, γ-caprolactone, α-valerolactone, and ε-caprolactone.

A remainder excluding the lithium salt and the compound represented by Formula 1 as the additive in the non-aqueous electrolyte solution of the present invention may all be the non-aqueous organic solvent unless otherwise stated.

### (4-3) Ionic Liquid Represented by Formula 2

The non-aqueous electrolyte solution for a lithium secondary battery of the present invention may include an ionic liquid represented by Formula 2 below as an additive.

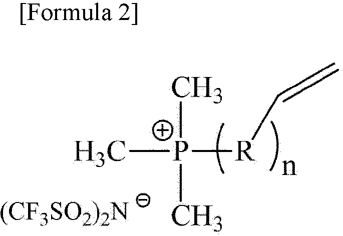

In Formula 2,
R is an alkylene group having 1 to 5 carbon atoms, and
n is an integer of 0 to 3.

Specifically, since the ionic liquid represented by Formula 2 contains phosphonium cations in its structure, it has a lower binding force with the non-aqueous organic solvent than an ionic liquid containing nitrogen cations which is used as a conventional additive. As a result, when lithium ions dissolved in the non-aqueous organic solvent are intercalated into the negative electrode, particularly, the negative electrode including the carbon-based negative electrode active material during charge, since the lithium ions are easily intercalated and penetration of the ionic liquid may be suppressed to prevent an exfoliation phenomenon on the surface of the negative electrode, a lithium secondary battery with improved charge/discharge efficiency and battery energy density may be prepared. Also, the phosphonium salt-based ionic liquid represented by Formula 2 may prevent a decrease in resistance and a side reaction between the electrode and the non-aqueous electrolyte solution by forming an inorganic film on the surface of the positive electrode. Particularly, with respect to the phosphonium salt-based ionic liquid represented by Formula 2, since the phosphonium cations may partially bind with the carbonate solvent to suppress the decomposition of the carbonate solvent during high-temperature storage and reduce the generation of the resulting gas such as CO₂, generation of by-products caused by bonds between the gas, such as CO₂, and Li ions on the surface of the positive electrode and/or the negative electrode may be suppressed. Thus, a problem, such as the increase in resistance of the lithium secondary battery during high-temperature storage, may be effectively improved. This effect may be more effectively achieved in a lithium secondary battery including the positive electrode active material having a nickel content of 70 atm% or more.

Specifically, in Formula 2, R may be an alkylene group having 1 to 3 carbon atoms.

More specifically, the ionic liquid represented by Formula 2 may be at least one of compounds represented by Formulae 2-1 to 2-3 below.

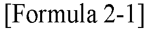

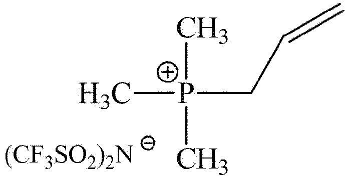

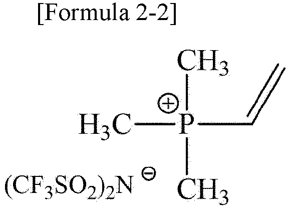

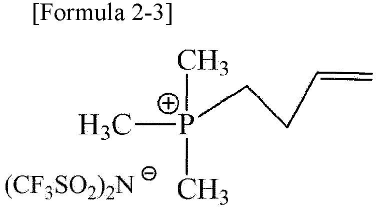

Also, the ionic liquid represented by Formula 2 may be included in an amount of 0.3 wt% to 50 wt% based on a total weight of the non-aqueous electrolyte solution.

In a case in which the amount of the ionic liquid represented by Formula 2 satisfies the above range, since a stable passivation film with low resistance may be formed on the surfaces of the positive electrode and the negative electrode to secure stable high-temperature and low-temperature capacity characteristics and to simultaneously achieve an effect of enhancing flame retardancy, overall performance of the lithium secondary battery in high-temperature and low-temperature atmospheres may be further improved.

Specifically, the ionic liquid represented by Formula 2 may be included in an amount of 0.5 wt% to 30 wt%, preferably, 0.5 wt% to 20 wt% based on the total weight of the non-aqueous electrolyte solution.

### (4-4) Other Additives

The non-aqueous electrolyte solution of the present invention may further include other additives in order to prevent the occurrence of collapse of the negative electrode due to the decomposition of the non-aqueous electrolyte solution in a high power environment or to further improve low-temperature high rate discharge characteristics, high-temperature stability, overcharge prevention, and an effect of suppressing battery swelling at high temperature.

Examples of the other additives may be at least one selected from the group consisting of a cyclic carbonate-based compound, a halogen-substituted carbonate-based compound, a sultone-based compound, a sulfate-based compound, a phosphate-based or phosphite-based compound, a borate-based compound, a benzene-based compound, an amine-based compound, a silane-based compound, and a lithium salt-based compound.

The cyclic carbonate-based compound may include vinylene carbonate (VC) or vinyl ethylene carbonate (VEC).

The halogen-substituted carbonate-based compound may include fluoroethylene carbonate (FEC).

The sultone-based compound, for example, may be at least one compound selected from the group consisting of 1,3-propane sultone (PS), 1,4-butane sultone, ethane sultone, 1,3-propene sultone (PRS), 1,4-butene sultone, and 1-methyl-1,3-propene sultone.

The sulfate-based compound, for example, may be ethylene sulfate (Esa), trimethylene sulfate (TMS), or methyl trimethylene sulfate (MTMS).

The phosphate-based or phosphite-based compound, for example, may be at least one compound selected from the group consisting of lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(trifluoroethyl)phosphite.

The borate-based compound may include tetraphenylborate and lithium oxalyldifluoroborate (LiODFB) and lithium bisoxalatoborate (LiB(C₂O₄)₂, LiBOB) which may form a film on the surface of the negative electrode.

The benzene-based compound may be fluorobenzene, the amine-based compound may be triethanolamine or ethylenediamine, and the silane-based compound may be tetravinylsilane.

The lithium salt-based compound is a compound different from the lithium salt included in the non-aqueous electrolyte solution, wherein the lithium salt-based compound may include at least one compound selected from the group consisting of LiPO₂F₂, LiODFB, LiBOB (lithium bisoxalatoborate (LiB(C₂O₄)₂), and LiBF₄.

Among these other additives, in order to form a more robust SEI film on the surface of the negative electrode during an initial activation process, other additives having an excellent film-forming effect on the surface of the negative electrode, specifically, at least one selected from the group consisting of vinylene carbonate, vinylethylene carbonate, fluoroethylene carbonate (FEC), and lithium oxalyldifluoroborate (LiODFB) may be included.

Two or more types of the other additives may be mixed and used, and the other additives may be included in an amount of 50 wt% or less, particularly 0.01 wt% to 10 wt%, and preferably 0.05 wt% to 5.0 wt% based on the total weight of the non-aqueous electrolyte solution. If the amount of the other additives is less than 0.01 wt%, an effect of improving low-temperature output, high-temperature storage characteristics, and high-temperature life characteristics of the battery is insignificant, and, if the amount of the other additives is greater than 50 wt%, there is a possibility that the side reaction in the electrolyte solution occurs excessively during charge and discharge of the battery. Particularly, since the additives for forming an SEI film may not be sufficiently decomposed at high temperatures when excessive amounts of the additives for forming an SEI film are added, the additives for forming an SEI film may be present in the form of an unreacted material or precipitates in the electrolyte solution at room temperature. Accordingly, a side reaction may occur in which life or resistance characteristics of the secondary battery are degraded.

The lithium secondary battery of the present invention may be prepared according to a conventional method known in the art and used, and may specifically be prepared by forming an electrode assembly in which the positive electrode, the negative electrode, and the separator between the positive electrode and the negative electrode are sequentially stacked, accommodating the electrode assembly in a battery case, and then injecting the non-aqueous electrolyte solution of the present invention.

A shape of the lithium secondary battery according to the present invention is not particularly limited, but a cylindrical type using a can, a prismatic type, a pouch type, or a coin type may be used.

Hereinafter, the present invention will be described in more detail according to examples. However, the invention may be embodied in many different forms and should not be construed as being limited to the embodiments set forth herein. Rather, these example embodiments are provided so that this description will be thorough and complete, and will fully convey the scope of the present invention to those skilled in the art.

### [Examples]

### Example 1.

### (Non-aqueous Electrolyte Solution Preparation)

After LiPF₆ was dissolved in a non-aqueous organic solvent, in which ethylene carbonate (EC) and ethyl methyl carbonate (EMC) were mixed in a volume ratio of 30:70, such that a concentration of the LiPF₆ was 1.0 M, a non-aqueous electrolyte solution was prepared by adding 1.0 wt% of the compound represented by Formula 2-1, and 0.5 wt% of vinylene carbonate as another additive.

### (Secondary Battery Preparation)

A positive electrode active material (Li(Ni_{0.6}Mn_{0.2}Co_{0.2})O₂), a conductive agent (carbon black), and a binder (polyvinylidene fluoride) were added in a weight ratio of 97.5:1:1.5 to N-methyl-2-pyrrolidone (NMP) to prepare a positive electrode slurry (solid content: 50 wt%). A 12 µm thick aluminum (Al) thin film, as a positive electrode collector, was coated with the positive electrode slurry, dried, and then roll-pressed to prepare a positive electrode.

A negative electrode active material (artificial graphite), a binder (SBR-CMC), and a conductive agent (carbon black) were added to water, as a solvent, in a weight ratio of 95:3.5:1.5 to prepare a negative electrode slurry (solid content: 60 wt%). A 6 µm thick copper (Cu) thin film, as a negative electrode collector, was coated with the negative electrode slurry, dried, and then roll-pressed to prepare a negative electrode.

After an electrode assembly was prepared by sequentially stacking the positive electrode, a polyolefin-based porous separator coated with inorganic particles (Al₂O₃), and the negative electrode, the electrode assembly was accommodated in a pouch-type battery case, and the non-aqueous electrolyte solution for a lithium secondary battery was injected to prepare a pouch-type lithium secondary battery with an operating voltage of 4.2 V or more.

### Example 2.

### (Non-aqueous Electrolyte Solution Preparation)

After LiPF₆ was dissolved in a non-aqueous organic solvent, in which ethylene carbonate (EC) and ethyl methyl carbonate (EMC) were mixed in a volume ratio of 30:70, such that a concentration of the LiPF₆ was 1.0 M, a non-aqueous electrolyte solution was prepared by adding 30.0 wt% of the compound represented by Formula 2-1, and 0.5 wt% of vinylene carbonate as another additive.

### (Secondary Battery Preparation)

A pouch-type lithium secondary battery was prepared in the same manner as in Example 1 except that the above-prepared non-aqueous electrolyte solution was injected.

### Example3.

### (Non-aqueous Electrolyte Solution Preparation)

After LiPF₆ was dissolved in a non-aqueous organic solvent, in which ethylene carbonate (EC) and ethyl methyl carbonate (EMC) were mixed in a volume ratio of 20:80, such that a concentration of the LiPF₆ was 1.2 M, a non-aqueous electrolyte solution was prepared by adding 0.5 wt% of the compound represented by Formula 2-1, and 0.5 wt% of vinylene carbonate and 0.5 wt% of 1,3-propane sultone as other additives.

### (Secondary Battery Preparation)

A positive electrode active material (Li(Ni_{0.6}Mn_{0.2}Co_{0.2})O₂), a conductive agent (carbon black), and a binder (polyvinylidene fluoride) were added in a weight ratio of 97.5:1:1.5 to N-methyl-2-pyrrolidone (NMP) to prepare a positive electrode slurry (solid content: 50 wt%). A 12 µm thick aluminum (Al) thin film, as a positive electrode collector, was coated with the positive electrode slurry, dried, and then roll-pressed to prepare a positive electrode.

A negative electrode active material (artificial graphite), a binder (SBR-CMC), and a conductive agent (carbon black) were added to water, as a solvent, in a weight ratio of 95:3.5:1.5 to prepare a negative electrode slurry (solid content: 60 wt%). A 6 µm thick copper (Cu) thin film, as a negative electrode collector, was coated with the negative electrode slurry, dried, and then roll-pressed to prepare a negative electrode.

After an electrode assembly was prepared by sequentially stacking the positive electrode, a polyolefin-based porous separator coated with inorganic particles (Al₂O₃), and the negative electrode, the electrode assembly was accommodated in a pouch-type battery case, and the non-aqueous electrolyte solution for a lithium secondary battery was injected to prepare a pouch-type lithium secondary battery with an operating voltage of 4.2 V or more.

### Example 4.

### (Non-aqueous Electrolyte Solution Preparation)

After LiPF₆ was dissolved in a non-aqueous organic solvent, in which ethylene carbonate (EC) and ethyl methyl carbonate (EMC) were mixed in a volume ratio of 20:80, such that a concentration of the LiPF₆ was 1.2 M, a non-aqueous electrolyte solution was prepared by adding 0.5 wt% of the compound represented by Formula 2-1, and 0.5 wt% of vinylene carbonate and 0.5 wt% of 1,3-propane sultone as other additives.

### (Secondary Battery Preparation)

A positive electrode active material (Li(Ni_{0.86}Mn_{0.07}Co_{0.05}Al_{0.02})O₂), a conductive agent (carbon black), and a binder (polyvinylidene fluoride) were added in a weight ratio of 97.5:1:1.5 to N-methyl-2-pyrrolidone (NMP) to prepare a positive electrode slurry (solid content: 50 wt%). A 12 µm thick aluminum (Al) thin film, as a positive electrode collector, was coated with the positive electrode slurry, dried, and then roll-pressed to prepare a positive electrode.

A negative electrode active material (artificial graphite), a binder (SBR-CMC), and a conductive agent (carbon black) were added to water, as a solvent, in a weight ratio of 95:3.5:1.5 to prepare a negative electrode slurry (solid content: 60 wt%). A 6 µm thick copper (Cu) thin film, as a negative electrode collector, was coated with the negative electrode slurry, dried, and then roll-pressed to prepare a negative electrode.

After an electrode assembly was prepared by sequentially stacking the positive electrode, a polyolefin-based porous separator coated with inorganic particles (Al₂O₃), and the negative electrode, the electrode assembly was accommodated in a pouch-type battery case, and the non-aqueous electrolyte solution for a lithium secondary battery was injected to prepare a pouch-type lithium secondary battery with an operating voltage of 4.2 V or more.

### Comparative Example 1.

A non-aqueous electrolyte solution for a lithium secondary battery and a pouch-type lithium secondary battery including the same were prepared in the same manner as in Example 1 except that the non-aqueous electrolyte solution was prepared by dissolving LiPF₆ in a non-aqueous organic solvent, in which ethylene carbonate (EC) and ethyl methyl carbonate (EMC) were mixed in a volume ratio of 30:70, such that a concentration of the LiPF₆ was 1.0 M, and adding 0.5 wt% of vinylene carbonate.

### Comparative Example 2.

A non-aqueous electrolyte solution for a lithium secondary battery and a pouch-type lithium secondary battery including the same were prepared in the same manner as in Example 3 except that the non-aqueous electrolyte solution was prepared by dissolving LiPF₆ in a non-aqueous organic solvent, in which ethylene carbonate (EC) and ethyl methyl carbonate (EMC) were mixed in a volume ratio of 20:80, such that a concentration of the LiPF₆ was 1.2 M, and adding 0.5 wt% of vinylene carbonate and 0.5 wt% of 1,3-propane sultone as additives.

### Comparative Example 3.

A non-aqueous electrolyte solution for a lithium secondary battery and a pouch-type lithium secondary battery including the same were prepared in the same manner as in Example 4 except that the non-aqueous electrolyte solution was prepared by dissolving LiPF₆ in a non-aqueous organic solvent, in which ethylene carbonate (EC) and ethyl methyl carbonate (EMC) were mixed in a volume ratio of 20:80, such that a concentration of the LiPF₆ was 1.2 M, and adding 0.5 wt% of vinylene carbonate and 0.5 wt% of 1,3-propane sultone as additives.

### [Experimental Examples]

### Experimental Example 1. Calorific Value Evaluation

Each of the lithium secondary batteries prepared in Examples 1 and 2 and the lithium secondary battery prepared in Comparative Example 1 was fully-charged to a state of charge (SOC) of 100% (44.3 mAh) under a voltage condition of 4.2 V. Thereafter, after the temperature was increased from room temperature (25°C) to 300°C, an internal calorific value of the lithium secondary battery was measured using a MMC instrument (Multiple Module Calorimeter, NETZSCH, MMC 274), and the results thereof are listed in Table 1 below.

**[Table 1]**

| | Battery internal calorific value (J) |
|---|---|
| Example 1 | 117 |
| Example 2 | 90 |
| Comparative Example 1 | 141 |

Referring to Table 1, it may be understood that the lithium secondary batteries of Examples 1 and 2 including the non-aqueous electrolyte solution of the present invention had a reduced internal calorific value in comparison to the lithium secondary battery of Comparative Example 1. As a result, it may be confirmed that thermal stability of the lithium secondary battery of the present invention was improved.

### Experimental Example 2. Evaluation of Gas Generation Amount After High-temperature Storage

After each of the lithium secondary batteries prepared in Examples 1 and 2 and the lithium secondary battery prepared in Comparative Examples 1 was charged at 0.33 C rate to 4.2 V under a constant current/constant voltage condition at room temperature (25°C), each lithium secondary battery was discharged to a depth of discharge (DOD) of 50% to adjust an SOC to 50% and then discharged at 2.5 C rate for 10 seconds.

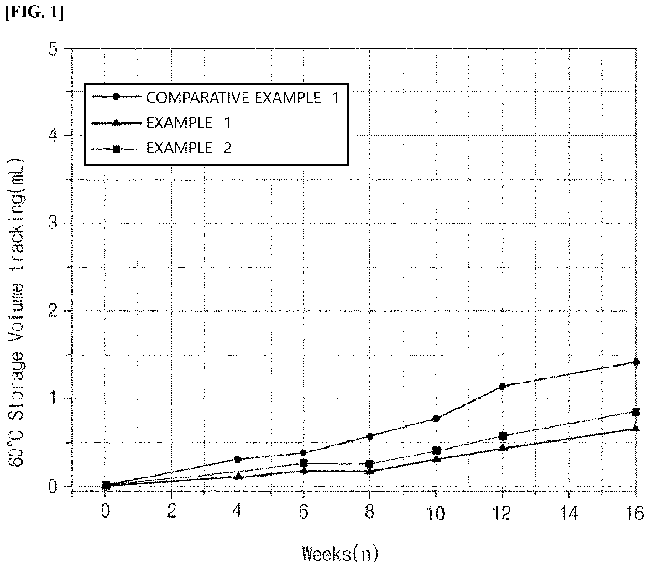

Then, while each lithium secondary battery was stored for 16 weeks in an atmosphere of 60°C, a gas generation amount (mL) of each lithium secondary battery was measured every 2 weeks, and the results thereof are presented in FIG. 1.

Referring to FIG. 1, it may be understood that the lithium secondary batteries of Examples 1 and 2 of the present invention had a reduced gas generation amount (mL) during high-temperature storage in comparison to the secondary battery of Comparative Example 1.

### Experimental Example 3. Low-temperature Cycle Characteristics Evaluation

After each of the lithium secondary batteries prepared in Examples 1 and 2 and the lithium secondary battery prepared in Comparative Example 1 was charged at 0.33 C rate to 4.2 V under a constant current condition at 15°C and charged at a constant voltage of 4.2 V and the charging was terminated when the charging current reached 0.275 mA, each lithium secondary battery was left standing for 10 minutes and discharged at s constant current of 0.5 C rate to 3.0 V.

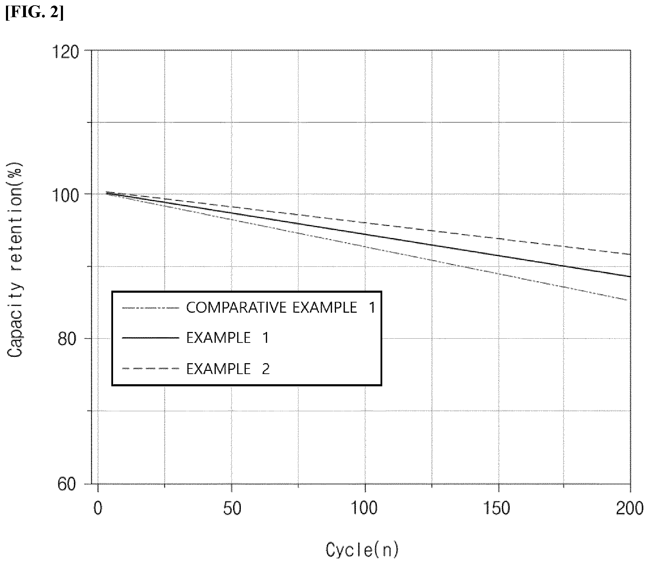

Subsequently, the above charging and discharging process were set as one cycle and 200 cycles of the charging and discharging were performed. In this case, after discharge capacity after a 1^{st} cycle and discharge capacity after a 200^{th} cycle were measured using PNE-0506 charge/discharge equipment (manufacturer: PNE SOLUTION Co., Ltd., 5 V, 6 A) and a capacity retention (%) after 200 cycles relative to initial capacity was calculated, the results thereof are presented in FIG. 2.

Referring to FIG. 2, with respect to the lithium secondary batteries of Examples 1 and 2 of the present invention, it may be understood that low-temperature cycle characteristics were improved in comparison to those of the lithium secondary battery of Comparative Example 1.

### Experimental Example 4. Low-temperature (-10°C) Storage Characteristics Evaluation

After each of the lithium secondary batteries prepared in Examples 1 and 2 and the lithium secondary battery prepared in Comparative Examples 1 was fully-charged at 0.33 C rate to 4.2 V under a constant current-constant voltage condition to adjust an SOC to 50% and then discharged at 2.5 C rate for 10 seconds to perform charging and discharging, initial capacity was measured using PNE-0506 charge/discharge equipment (manufacturer: PNE SOLUTION Co., Ltd., 5 V, 6 A).

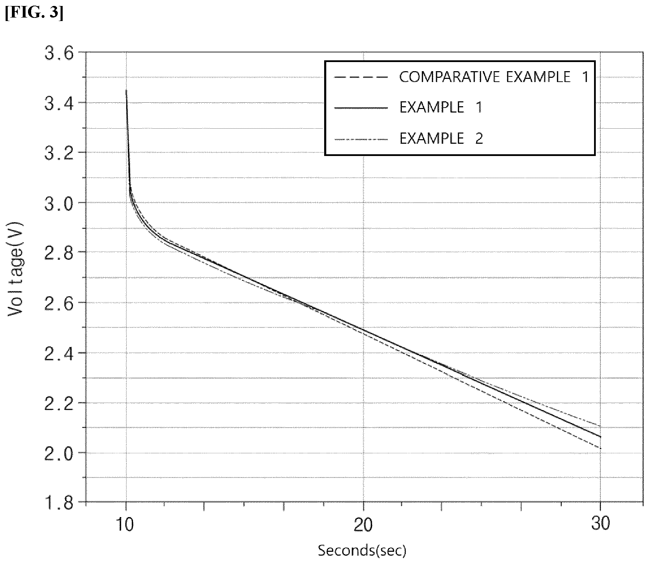

Then, after aging at -10°C for 3 hours, a voltage drop, which occurred when each lithium secondary battery was discharged at 0.67 C rate for 30 seconds, was measured using the PNE-0506 charge/discharge equipment (manufacturer: PNE SOLUTION Co., Ltd., 5 V, 6 A), and the results thereof are presented in FIG. 3.

Also, after capacity of each battery after discharging for 30 seconds was measured using the PNE-0506 charge/discharge equipment, a capacity retention (%) relative to the initial capacity was calculated and presented in Table 2 below. In this case, the capacity retentions (%) of the lithium secondary batteries of Examples 1 and 2 in Table 2 below each mean a relative ratio when the capacity retention (%) of the lithium secondary battery of Comparative Example 1 was set as 100%.

**[Table 2]**

| | Capacity retention after low-temperature storage (%) |
|---|---|
| Example 1 | 108 |
| Example 2 | 108 |
| Comparative Example 1 | 100 |

Referring to Table 2 and FIG. 3, with respect to the lithium secondary batteries of Examples 1 and 2 of the present invention, it may be understood that a voltage drop phenomenon at low temperature was improved and the capacity retentions (%) were also improved in comparison to those of the lithium secondary battery of Comparative Example 1. From these results, since resistances during low-temperature storage of the lithium secondary batteries of Examples 1 and 2 of the present invention were reduced in comparison to that of the lithium secondary battery of Comparative Example 1, it may be predicted that storage characteristics were improved.

### Experimental Example 5.

After each of the lithium secondary batteries prepared in Examples 3 and 4 and the lithium secondary batteries prepared in Comparative Examples 2 and 3 was activated at a CC of 0.1 C and degassing was performed, a charge/discharge process, in which each lith ium secondary battery was charged at a constant current of 0.04 C to 4.2 V at room temperature (25°C) and then discharged to 3.0 V under a constant current (CC) condition, was set as one cycle and 3 cycles were performed.

Subsequently, each lithium secondary battery was charged at a CC of 0.33 C to 4.20 V under a constant current-constant voltage (CC-CV) charging condition at 25°C and then pulse discharged at 2.5 C rate and an SOC of 50% to measure a voltage drop for 10 seconds to obtain an initial resistance value.

Subsequently, after each lithium secondary battery was charged at a constant current of 0.04 C to an SOC (state of charge) of 100% and then stored for 34 weeks in a high-temperature (60°C) state, each battery was charged to an SOC of 50% at room temperature (25°C) and then pulse discharged at 2.5 C rate to measure a voltage drop for 10 seconds to obtain a resistance value after high-temperature storage.

Then, a resistance increase rate (%) relative to the initial resistance was calculated and presented in Table 3 below. In this case, the voltage was measured using PNE-0506 charge/discharge equipment (manufacturer: PNE SOLUTION Co., Ltd., 5 V, 6 A).

**[Table 3]**

| | Resistance increase rate (%) after high-temperature storage (60°C) relative to the initial resistance |
|---|---|
| Comparative Example 2 | 37% |
| Example 3 | 15% |
| Comparative Example 3 | 50% |
| Example 4 | 18% |

Referring to Table 3, with respect to the lithium secondary battery of Example 3 which included the positive electrode including Li(Ni_{0.6}Mn_{0.2}Co_{0.2})O₂, as the positive electrode active material, and the non-aqueous electrolyte solution of the present invention, it may be understood that a resistance increase rate was reduced by about 59% in comparison to that of the lithium secondary battery of Comparative Example 2. Also, with respect to the lithium secondary battery of Example 4 which included the positive electrode including Li(Ni_{0.86}Mn_{0.07}Co_{0.05}Al_{0.02})O₂, as the positive electrode active material, and the non-aqueous electrolyte solution of the present invention, it may be understood that a resistance increase rate was reduced by about 64% in comparison to that of the lithium secondary battery of Comparative Example 3. Referring to these results, it may be understood that a more effective effect of suppressing an increase in resistance may be obtained when the positive electrode including the positive electrode active material having a nickel content of 70 atm% or more was combined with the non-aqueous electrolyte solution of the present invention.

## Claims

1. A lithium secondary battery comprising:
a positive electrode including a lithium transition metal oxide of Formula 1 as a positive electrode active material;
a negative electrode including a negative electrode active material;
a separator disposed between the positive electrode and the negative electrode; and
a non-aqueous electrolyte solution including a lithium salt, a non-aqueous organic solvent, and an additive,
wherein the additive comprises an ionic liquid represented by Formula 2:
[Formula 1] Li₁₊ₐNiₓCo_{y}M¹_{z}M²_{w}O₂
wherein in Formula 1,
M¹ is manganese (Mn), aluminum (Al), or a combination thereof,
M² is at least one selected from the group consisting of Al, zirconium (Zr), tungste n (W), titanium (Ti), magnesium (Mg), calcium (Ca), and strontium (Sr), and 0≤a≤0.5, 0.5 <x<1.0, 0<y≤0.4, 0<z≤0.4, and 0≤w≤0.1. 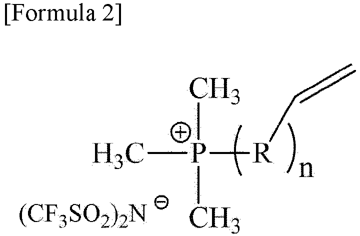 wherein in Formula 2,
R is an alkylene group having 1 to 5 carbon atoms, and
n is an integer of 0 to 3.

2. The lithium secondary battery of claim 1, wherein, in Formula 1, 0≤a≤0.2, 0.6≤x≤1.0, 0<y≤0.3, 0<z≤0.3, and 0<w≤0.05.

3. The lithium secondary battery of claim 1, wherein, in Formula 1, 0≤a≤0.1, 0.75≤x≤0.98, 0.05≤y≤0.3, 0.01≤z≤0.3, and 0<w≤0.02.

4. The lithium secondary battery of claim 1, wherein the lithium transition metal oxide includes at least one selected from the group consisting of Li(Ni_{0.6}Mn_{0.2}Co_{0.2})O₂, Li(Ni_{0.7}Mn_{0.15}Co_{0.15})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, and Li(Ni_{0.90}Mn_{0.05}Co_{0.05})O₂.

5. The lithium secondary battery of claim 1, wherein the negative electrode active material comprises a carbon-based negative electrode active material, a silicon-based negative electrode active material, or a mixture thereof.

6. The lithium secondary battery of claim 1, wherein, in Formula 2, R is an alkylene group having 1 to 3 carbon atoms.

7. The lithium secondary battery of claim 1, wherein the ionic liquid represented by Formula 2 includes at least one compounds represented by one of Formulae 2-1 to 2-3:

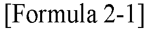

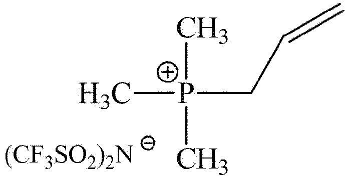

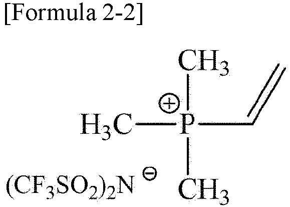

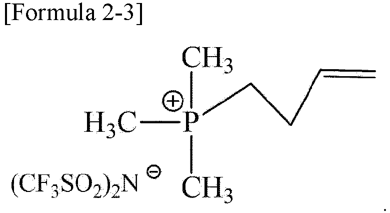

8. The lithium secondary battery of claim 1, wherein the ionic liquid represented by Formula 2 is included in an amount of 0.3 wt% to 50 wt% based on a total weight of the non-aqueous electrolyte solution for a lithium secondary battery.

9. The lithium secondary battery of claim 1, wherein the ionic liquid represented by Formula 2 is included in an amount of 0.5 wt% to 30 wt% based on a total weight of the non-aqueous electrolyte solution for a lithium secondary battery.

10. The lithium secondary battery of claim 1, wherein the non-aqueous electrolyte solution further comprises at least one other additive selected from the group consisting of a cyclic carbonate-based compound, a halogen-substituted carbonate-based compound, a sultone-based compound, a sulfate-based compound, a phosphate-based compound or phosphite-based compound, a borate-based compound, a benzene-based compound, an amine-based compound, a silane-based compound, and a lithium salt-based compound.
